(19) Europäisches Patentamt
European Patent Office
Office européen des brevets

(11) Veröffentlichungsnummer: **0 054 807**
**B1**

# (12) EUROPÄISCHE PATENTSCHRIFT

(45) Veröffentlichungstag der Patentschrift: **10.04.85**

(51) Int. Cl.[4]: **C 08 G 63/46,** C 08 G 63/18, C 08 C 19/36

(21) Anmeldenummer: **81110178.1**

(22) Anmeldetag: **05.12.81**

(54) **Thermoplastische Blockcopolyester.**

(30) Priorität: **19.12.80 DE 3047927**

(43) Veröffentlichungstag der Anmeldung: **30.06.82 Patentblatt 82/26**

(45) Bekanntmachung des Hinweises auf die Patenterteilung: **10.04.85 Patentblatt 85/15**

(84) Benannte Vertragsstaaten: **DE FR GB IT**

(56) Entgegenhaltungen:
**DE - A - 1 720 727**
**DE - A - 2 032 818**
**DE - A - 2 458 472**
**DE - A - 2 801 145**
**US - A - 3 853 815**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Binsack, Rudolf, Dr., Bethelstrasse 4 a, D-4150 Krefeld 1 (DE)**
Erfinder: **Köhler, Karl-Heinz, Dr., Buschstrasse 106, D-4150 Krefeld 1 (DE)**
Erfinder: **Grigo, Ulrich, Dr., c/o Mobay Chemical Corporation, New Martinsville W. Va. 26166 (US)**
Erfinder: **Morbitzer, Leo, Dr., Rungestrasse 50, D-5000 Koeln 80 (DE)**
Erfinder: **Bottenbruch, Ludwig, Dr., Woehlerstrasse 5, D-4150 Krefeld 1 (DE)**
Erfinder: **Heitz, Walter, Prof. Dr., Am Schmidtborn 5, D-3575 Kirchhain (DE)**

**EP 0 054 807 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft thermoplastische Blockcopolyester, die sich zur Herstellung von vorzugsarmen, aber dennoch hochkristallinen Formkörpern eignen, ein Verfahren zur Herstellung dieser Blockcopolyester aus a) reaktionsfähigen Polydienderivaten, b) Dicarbonsäuren oder ihren reaktionsfähigen Derivaten und c) Diolen sowie die Verwendung dieser thermoplastischen Blockcopolyester zur Herstellung von Formkörpern, vornehmlich von Spritzgussartikeln.

Thermoplastische Polyester haben wegen ihrer wertvollen technologischen Eigenschaften, wie z.B. Steifigkeit, Härte, Abriebfestigkeit, dynamische und thermische Belastbarkeit, als Faserrohstoffe und als Harzkomponenten für Formmassen zunehmend an Bedeutung gewonnen. Aufgrund ihrer hohen Kristallinität werden insbesondere die Polyester auf Basis von Terephthalsäure, Ethylenglykol, Butandiol-1,4 bzw. 1,4-Dimethylolcyclohexan gerne eingesetzt.

Beispiel 2 der DE-OS 28 01 145 beschreibt die Herstellung eines Blockcopolyesters aus Dimethylterephthalat, Butandiol-1,4 und einem Polybutadien mit OH-Endgruppen einer Funktionalität von 2,4 bis 2,6, 60% trans-1,4-Bindungen, 20% cis-1,4-Bindungen aus 20% Vinyl-1,2-bindungen. Erhalten wird ein zähes cremiges Produkt.

Eine unerwünschte Eigenschaft dieser Polyester sind Verzugserscheinungen. Sie treten hauptsächlich bei dünnen Teilen – besonders markant im Falle von Glasfaserverstärkung – auf und schränken die Verwendung der Polyester empfindlich ein. Man hat bereits vorgeschlagen, den Verzug durch Zusatz von aromatischen Polyestern (DE-OS 30 02 814, europäische Patentanmeldung 0 012 505) oder Füllstoffen zu vermindern, musste dies aber durch einen Kristallinitätsabfall erkaufen, der dem Anteil des Zusatzes mindestens proportional war, sehr oft aber noch höher lag. Mit anderen Worten: Den Verzug konnte man nur vermeiden, wenn man gleichzeitig auf die wichtigste Eigenschaft, die die fraglichen Polyester so begehrenswert macht – also die Kristallinität – teilweise verzichtete. Es bestand also ein Bedürfnis nach einer Methode, die es erlaubt, den Verzug von thermoplastischen kristallinen Polyestern zu verringern, gleichzeitig aber die Kristallinität weitgehend zu erhalten, d.h. der Kristallinitätsabfall sollte höchstens dem zugesetzten Anteil proportional, vorzugsweise aber geringer sein.

Als Mass für den Kristallinitätsabfall gilt nachfolgend die relative Kristallinität, definiert durch den Quotienten

$$\frac{\text{Schmelzenthalpie des modifizierten Polyesters,}}{\text{Schmelzenthalpie des unmodifizierten Polyesters}}$$

jeweils gemessen während einer zweiten Aufheizperiode (der standardisierte erste Aufheizvorgang, gefolgt von einer standardisierten Abkühlung und einer standardisierten zweiten Aufheizung – z.B. mit einer Rate von 20°/Minute) gewährleistet die Gleichartigkeit der Vorbehandlung) und bezogen auf den unmodifizierten Polyester als Standard (relative Kristallinität = 1).

Würde z.B. ein Zusatz von 30% Pigment die Schmelzenthalpie eines Polybutylenterephthalats von 51 J/g auf 31 J/g senken, wäre dieser Abfall überproportional, weil die relative Kristallinität 31/51 = 0.608 betragen würde und nur für einen Zusatz von 39,2% Pigment proportional wäre.

Es wurde nun gefunden, dass Blockcopolyester auf Basis von Polyalkylenterephthalaten, die Polydienblöcke enthalten, selbst dann, wenn sie zu dünnen Teilen verarbeitet werden, einen äusserst geringen Verzug und dennoch eine Kristallinität aufweisen, die gegenüber der Kristallinität des unmodifizierten Polyalkylenterephthalats weniger als um das dem Polydienanteil entsprechende Verhältnis abfällt. Dies war umso überraschender, als von Polydienen, also Elastomeren, nicht erwartet werden konnte, dass sie einen Beitrag zur Kristallinität leisten, sondern vielmehr angenommen werden musste, dass sie diese empfindlich stören.

Gegenstand der Erfindung sind Blockcopolyester mit einer relativen Viskosität (gemessen in Phenol/o-Dichlorbenzol, Gewichtsverhältnis 1:1 bei 25 °C) von 1,15 bis 3,0, vorzugsweise 1,3 bis 2,5, die – die Endgruppen nicht berücksichtigt – aus

A) 1–60, vorzugsweise 10–50, insbesondere 16–45, Gew.-%, bezogen auf Blockcopolyester, langkettiger Einheiten der Formel

$$-O-D-O-\overset{\overset{O}{||}}{C}-S-\overset{\overset{O}{||}}{C}- \qquad \text{Ia}$$

und/oder

$$-\overset{\overset{O}{||}}{C}-D-\overset{\overset{O}{||}}{C}-O-G-O- \qquad \text{Ib}$$

und/oder

$$-O-\overset{\overset{O}{||}}{C}-O-D-O-\overset{\overset{O}{||}}{C}-O-G-O- \qquad \text{Ic}$$

und

B) 40–99, vorzugsweise 50–90, insbesondere 55–84, Gew.-%, bezogen auf Blockcopolyester, kurzkettiger Einheiten der Formel

$$-O-G-O-\overset{\overset{O}{||}}{C}-S-\overset{\overset{O}{||}}{C}- \qquad \text{II}$$

bestehen, dadurch gekennzeichnet, dass

D einen zweiwertigen Polydienrest mit mindestens 50 Mol-%, vorzugsweise mindestens 70 Mol-%, 1,4-Verknüpfungen, endständigen Verknüpfungsstellen und einem mittleren Molekulargewicht $\overline{M}_n$ von 400 bis 5000, vorzugsweise 450 bis 3000, insbesondere von 500 bis 1200,

wobei gegebenenfalls vorhandene Seitenketten nur Methyl- und/oder Vinylgruppen sein können,

G einen zweiwertigen aliphatischen Rest mit 1 bis 12 C-Atomen und/oder einen zweiwertigen cycloaliphatischen Rest mit 6 bis 12 C-Atomen mit einem Molekulargewicht unter 300, wobei mindestens 70 Mol-% von G einen einheitlichen Rest darstellen,

S eine Einfachbindung oder einen zweiwertigen aliphatischen, cycloaliphatischen und/oder aromatischen Rest mit 1 bis 14 C-Atomen und mit einem Molekulargewicht unter 300, wobei mindestens 70 Mol-% von S 1,4-Phenylenreste sind, darstellen.

«Endgruppen» in diesem Zusammenhang sind einwertige Reste, die aus den eingesetzten Ausgangsverbindungen stammen und zusammen mit den Teilstrukturen Ia, Ib und/oder Ic und II das Makromolekül der erfindungsgemässen Blockcopolyester bilden, selbst aber keine Teilstrukturen Ia–Ic bzw. II enthalten.

Die «langkettige Einheit» A ist der Rest eines Reaktionsproduktes

a) eines Hydroxyl-terminierten Polydiens mit einer Dicarbonsäure oder deren reaktionsfähigem Derivat, vgl. Formel Ia;

b) eines Carboxyl-, Alkylcarboxi-, Cycloalkylcarboxi-, Benzylcarboxi- oder Arylcarboxi-terminierten Polydiens mit einem Diol, vgl. Formel Ib;

c) eines Alkylcarbonat-, Cycloalkylcarbonat-, Benzylcarbonat- oder Arylcarbonat-terminierten Polydiens mit einem Diol, vgl. Formel Ic.

Weiterer Gegenstand der Erfindung ist ein Verfahren zur Herstellung von Blockcopolyestern mit einer relativen Viskosität (gemessen in Phenol/o-Dichlorbenzol, Gewichtsverhältnis 1:1, bei 25 °C) von 1,15 bis 3,0, vorzugsweise 1,3 bis 2,5, dadurch gekennzeichnet, dass man

1. Hydroxyl-, Carboxyl-, Alkylcarboxi-, Cycloalkylcarboxi-, Benzylcarboxi-, Arylcarboxi-, Alkylcarbonat-, Cycloalkylcarbonat-, Benzylcarbonat- oder Arylcarbonat-terminierte Polydiene, wobei der Polydienrest mindestens 50 Mol-%, vorzugsweise mindestens 70 Mol-%, 1,4-Verknüpfungen, endständige Verknüpfungsstellen und ein mittleres Molekulargewicht $\overline{M}_n$ von 500 bis 5000, vorzugsweise 450 bis 3000, insbesondere 500 bis 1200, aufweist und gegebenenfalls vorhandene Seitengruppen nur Methyl- und/oder Vinylgruppen sein können, mit

2. mindestens einem Dicarbonsäurederivat der Formel

$$R^1\text{-}O\overset{O}{\overset{\|}{C}}\text{-}S\text{-}\overset{O}{\overset{\|}{C}}\,OR^2$$

worin

$R^1$, $R^2$ ein Wasserstoffatom oder $C_1$–$C_{10}$-Alkyl bedeuten und

S die oben angegebene Bedeutung hat, und

3. mindestens einem Diol der Formel

$$HO\text{–}G\text{–}OH$$

worin

G die oben angegebene Bedeutung hat, umestert bzw. verestert und anschliessend polykondensiert, bis die gewünschte Viskosität erreicht ist, wobei die Mengen der Ausgangskomponenten so gewählt werden, dass der erhaltene Blockcopolyester – die Endgruppen nicht berücksichtigt –

1–60, vorzugsweise 10–50, insbesondere 16–45, Gew.-% langkettiger Einheiten der Formel Ia, Ib und/oder Ic und

40–99, vorzugsweise 50–90, insbesondere 55–84, Gew.-% kurzkettiger Einheiten der Formel II enthält.

Ein weiterer Gegenstand der Erfindung ist die Verwendung dieser Blockcopolyester zur Herstellung von Formkörpern, insbesondere von Spritzgussartikeln.

Die zur Herstellung der erfindungsgemässen Blockcopolyester bevorzugten Polydienderivate sind Derivate des Butadiens, Isoprens, Chloroprens und 2,3-Dimethylbutadiens. Sie besitzen zwei endständige reaktive Gruppen. Derartige Polydienderivate sind bekannt; sie können in Gegenwart von radikalbildenden Initiatoren, wie z.B. Dialkylperoxidicarbonaten oder Azodicarbonsäureestern durch Massepolymerisation hergestellt werden (DE-OS 29 00 880 und 29 08 298). Die Polydiene mit endständigen Hydroxylgruppen können aus den Polydienen mit endständigen Carbonatestergruppen durch Hydrolyse oder aus den Polydienen mit endständigen Carbonsäureestergruppen durch Reduktion der Estergruppe hergestellt werden.

Die mittleren Molekulargewichte der Polydienkomponenten werden dampfdruckosmometrisch in Benzol bestimmt.

Zur Herstellung der erfindungsgemässen Blockcopolyester bevorzugte Diole HO–G–OH sind Ethylenglykol, Propandiol-1,3, Butandiol-1,4, Hexandiol-1,6 und Cyclohexandimethanol-1,4.

Zur Herstellung der erfindungsgemässen Blockcopolyester bevorzugte Dicarbonsäuren HOOC–S–COOH oder den bevorzugten Dicarbonsäurederivaten $R^1OOC\text{–}S\text{–}COOR^2$ zugrundeliegende Dicarbonsäuren sind Oxalsäure, Malonsäure, Bernsteinsäure, Glutarsäure, Adipinsäure, Pimelinsäure, Azelainsäure, Sebacinsäure, insbesondere Cyclohexandicarbonsäuren, wie z.B. Cyclohexandicarbonsäure-1,4, und Adipinsäure;

eine besonders bevorzugte Klasse der Dicarbonsäuren stellen die aromatischen Dicarbonsäuren dar. Beispiele für aromatische Dicarbonsäuren sind Isophthalsäure, Terephthalsäure, Diphenyldicarbonsäure-1,4, Bis-(p-carboxiphenyl)-methan, Naphthalindicarbonsäure-1,5 und -2,6.

Die bevorzugtesten Diole sind Ethylenglykol und Butandiol-1,4. Die bevorzugteste Dicarbonsäure ist Terephthalsäure.

Die zur Herstellung der erfindungsgemässen Blockcopolyester eingesetzten Polydieneinheiten D und die Dicarbonsäureeinheiten

$$\overset{O}{\overset{\|}{C}}\text{–}S\text{–}\overset{O}{\overset{\|}{C}}$$

werden in molaren Anteilen, in denen sie im Reaktionsgemisch eingesetzt werden, in den Blockcopolyester eingebaut. Das Diol HO–G–OH wird, auch wenn es im Überschuss im Reaktionsgemisch vorliegt, äquimolar zur Summe der eingesetzten Dicarbonsäurederivate $R^1OOC–S–COOR^2$ und der eingesetzten Polydien-dicarbonsäure HOOC–D–COOH bzw. als äquimolekulare Differenz der eingesetzten Dicarbonsäurederivate $R^1OOC–S–COOR^2$ und des eingesetzten Polydien-diols HO–D–OH bzw. Polydien-dicarbonatesters in den Blockcopolyester chemisch eingebaut. Werden Gemische von Diolen HO–G–OH eingesetzt, so hängt der Anteil der eingebauten Diole von den Siedepunkten und den relativen Reaktivitäten der Diole ab.

Bevorzugte erfindungsgemässe Blockcopolyester sind Reaktionsprodukte aus Terephthalsäure (dimethylester), Butandiol-1,4 oder Ethylenglykol sowie den Diolen, Dicarbonsäuren, Dicarbonsäuredialkylestern oder Dicarbonaten von Polybutadien, Poly-2,3-dimethylbutadien, Polychloropren und insbesondere Polyisopren.

Die erfindungsgemässen Blockcopolyester können als Endgruppen – jeweils bezogen auf die Teilstrukturen Ia–Ic bzw. II – z.B. Carbonyl-ständig: Hydroxyl, O–$C_1$–$C_{10}$-Alkyl, Oxi-ständig: Wasserstoff und Carbonat-ständig: Alkyl oder Cycloalkyl mit 1–12 C-Atomen sein.

Die Viskosität der erfindungsgemässen Blockcopolyester kann z.B. im Ubbelohde-Viskosimeter gemessen werden.

Die erfindungsgemässen Blockcopolyester können nach den für thermoplastische Polyester üblichen Herstellungsverfahren hergestellt werden. Der erste Reaktionsschritt besteht daher aus einem Umesterungsschritt, wenn die Ester der Dicarbonsäure bzw. der Polydien-dicarbonsäure eingesetzt werden, oder aus einem Veresterungsschritt, wenn die jeweiligen freien Dicarbonsäuren eingesetzt werden. Auch die Kombination von Veresterung und Umesterung in der ersten Reaktionsstufe ist möglich, nämlich dann, wenn sowohl Dicarbonsäureester als auch freie Dicarbonsäure eingesetzt werden. An die erste Reaktionsstufe der Umesterung bzw. Veresterung schliesst sich die normale Polykondensation bei höheren Temperaturen und verringertem Druck an.

Es hat sich als vorteilhaft erwiesen, das verwendete Polydienderivat zunächst mit einem Überschuss an Dicarbonsäure (diester) $R^1OOC–S–COOR^2$ umzusetzen, wenn Polydiendiole bzw. Polydien-dicarbonatester verwendet werden, und mit einem Überschuss an Diol HO–G–OH, wenn Polydien-dicarbonsäure(diester) eingesetzt werden.

Zur Erhöhung des bei der Polykondensation in der Schmelze erzielten Molekulargewichtes der Blockcopolyester kann es sich empfehlen, eine für thermoplastische Polyester bekannte Festphasenpolykondensation anzuschliessen. Hierbei wird üblicherweise 5 bis 50 °C unter dem Schmelzpunkt des Polyesters im Inertgasstrom oder im Vakuum so lange erhitzt, bis das gewünschte Molekulargewicht erreicht ist.

Die erfindungsgemässen Blockcopolyester besitzen, bezogen auf den Polydienanteil, extrem hohe Schmelzpunkte. Ausserdem zeichnen sie sich – wie oben bereits erwähnt – durch eine überraschend hohe Kristallinität aus, erkennbar an der nur wenig verminderten Schmelztemperatur und der Schmelzenthalpie der kristallinen Anteile.

Die erfindungsgemässen Blockcopolyester können in der üblichen Weise modifiziert werden. Sie können z.B. Verstärkungs- und Füllstoffe, Flammschutzmittel, Stabilisatoren, Nukleier-, Gleit- und Formtrennmittel sowie Farbstoffe und Pigmente enthalten.

Die Verstärkungs- und Füllstoffe, die zur Erhöhung der Steifigkeit und der Festigkeit dienen, werden in üblichen Mengen von 5 bis 40 Gew.-%, bezogen auf die Summe aus Blockcopolyester und Zusätze, verwendet. Es kommen beispielsweise in Frage: Kaolin, Quarz, Glimmer, Wollastonit, Talkum, Titandioxid, Aluminiumoxid, vorzugsweise Glasfasern.

Als Flammschutzmittel kommen die für thermoplastische Polyester bekannten Verbindungen in Frage, also z.B. organische Halogenverbindungen, wie Deca- und Octabromdiphenyl, Tetrabrombisphenolpolycarbonat. In der Regel wird ein weiteres Flammschutzmittel verwendet, das als Synergist wirkt, vorzugsweise Antimontrioxid. Die einzusetzenden Mengen an Flammschutzmittel liegen im allgemeinen zwischen 10 und 25 Gew.-%, bezogen auf die Summe aller Bestandteile.

Die erfindungsgemässen Blockcopolyester lassen sich nach den für thermoplastische Formmassen typischen Spritzguss- und Extrusions-Verfahren zu den verschiedensten Formkörpern verformen, z.B. zu Karosserieteilen.

Beispiele

Herstellung von Polybutadiendicarbonsäuredimethylester:

Die Herstellung des in den nachfolgenden Beispielen verwendeten Polybutadiendicarbonsäuredimethylesters erfolgte durch Massepolymerisation von Butadien in Gegenwart von Azoisobuttersäuremethylester nach DE-OS 29 00 880. Hergestellt wurden Produkte mit einem Molekulargewicht von 750 (Typ A) und 1200 (Typ B) (als Zahlenmittel bestimmtes Molekulargewicht $\overline{M}_n$, gemessen mittels Dampfdruckosmose in Benzol).

Der Anteil an 1,4-Verknüpfungen beträgt 78 Mol-% für Typ A und 80 Mol-% für Typ B.

Herstellung von Polyisoprendicarbonsäuredimethylester:

Die Herstellung erfolgte analog der Herstellung des Polybutadiendicarbonsäuredimethylesters. Das erhaltene Produkt besass ein (als Zahlenmittel $\overline{M}_n$ mittels Dampfdruckosmose in Benzol bestimmtes) Molekulargewicht von 900 und 76 Mol-% 1,4-Verknüpfungen (Typ C).

Herstellung der Blockcopolyester:

Beispiele 1–5

In einem mit Rührer und mit für eine Destillation ausgerüsteten Reaktionsgefäss wurden unter Stickstoffatmosphäre folgende Reaktionskomponenten bei 200 °C eine Stunde umgesetzt:

100,9 Gew.-Teile Butandiol-1,4,

Y Gew.-Teile Polybutadiendicarbonsäuredimethylester, Typ A, und

0,092 Gew.-Teile Titantetraisopropylat.

Nach Beendigung der Methanol-Abspaltung wurden dem Reaktionsgemisch Z Gew.-Teile Dimethylterephthalat zugesetzt.

Im Anschluss daran wurde unter Stickstoff-Atmosphäre 3 Stunden bei 200 °C gerührt, wobei Methanol abdestillierte. Anschliessend wurde die Temperatur des Reaktionsgemisches innerhalb von 30 Minuten auf 250 °C erhöht, während gleichzeitig der Druck im Reaktionsgefäss von Normaldruck auf ca. 0.66 mbar (0,5 Torr) abgesenkt wurde. Das Reaktionsgemisch wurde bei diesen Bedingungen 40 Minuten gerührt, wobei die Viskosität der Schmelze gegen Ende der Reaktion stark anstieg. Der erhaltene Blockcopolyester wurde in Wasser abgesponnen, zerkleinert und nach dem Trocknen auf einer üblichen Spritzgussmaschine bei 250 °C zu Normkleinstäben verspritzt.

Schmelztemperatur und Schmelzwärme der kristallinen Anteile der Blockcopolyester wurden durch Differential-Thermoanalyse (DSC-Methode) ermittelt. Die Ergebnisse sind der Tabelle 1 zu entnehmen:

Tabelle 1

| Beispiel | DMT[1] Z [Gew.-Tle.] | Polybutadien-dicarbonsäure-dimethylester, Y [Gew.-Tle.] | Gew.-%[2] | Blockcopolyester rel. Viskosität[3] | Fp.[4] [°C] | Schmelzenthalpie[5] (J/g) |
|---|---|---|---|---|---|---|
| 1 | 155,3 | 17,6 | 9,4 | 1,45 | 221 | 48 |
| 2 | 155,3 | 44 | 20,6 | 1,38 | 218 | 42 |
| 3 | 155,3 | 76 | 30,9 | 1,35 | 213 | 38 |
| 4 | 116,5 | 88 | 40,9 | 1,33 | 210 | 37 |
| Vergleich | 155,3 | – | – | 1,48 | 225 | 51 |

[1] Dimethylterephthalat
[2] bezogen als Esteranteil auf den gesamten Blockcopolyester
[3] gemessen in Phenol/o-Dichlorbenzol (1:1 Gew.-Teile) bei 25 °C im Ubbelohde-Viskosimeter
[4] Maximum der Hauptschmelztemperatur, gemessen nach der DSC-Methode bei 2. Aufheizen
[5] Gesamtschmelzenthalpie, gemessen nach der DSC-Methode beim 2. Aufheizen

Beispiele 6–9

Die Umsetzung wurde analog den Beispielen 1–5 durchgeführt. Eingesetzt wurden

100,9 Gew.-Teile Butandiol-1,4,

Y Gew.-Teile Polybutadiendicarbonsäuredimethylester, Typ B,

155,3 Gew.-Teile Dimethylterephthalat sowie

0,092 Gew.-Teile Titantetraisopropylat.

Die Aufarbeitung und Untersuchung der Blockcopolyester wurde analog den Beispielen 1–5 durchgeführt. Die Ergebnisse sind der Tabelle 2 zu entnehmen:

Tabelle 2

| Beispiel | Polybutadien-dicarbonsäure-dimethylester, Typ B Y [Gew.-Tle.] | Gew.-%[2] | Blockcopolyester rel. Viskosität[3] | Fp.[4] [°C] | Schmelzenthalpie[5] [J/g] |
|---|---|---|---|---|---|
| 6 | 9,7 | 5,3 | 1,52 | 224 | 50,3 |
| 7 | 20,4 | 10,6 | 1,39 | 223 | 49,8 |
| 8 | 44,8 | 20,6 | 1,34 | 222 | 45,7 |
| 9 | 77,5 | 31,0 | 1,33 | 218 | 38,5 |

[2–5] Bedeutung wie in Tabelle 1.

Beispiele 10–11

Analog den Beispielen 1–9 wurden 100,9 Gew.-Teile Butandiol-1,4, Y Gew.-Teile Polyisoprendicarbonsäuredimethylester, Typ C, 155,3 Gew.-Teilen Dimethylterephthalat und 0,092 Gew.-Teile Titantetrisopropylat umgesetzt.

Die Ergebnisse der Untersuchungen an den erhaltenen Blockcopolyestern sind in Tabelle 3 zusammengefasst.

Tabelle 3

| Beispiel | Polyisopren-dicarbonsäure-dimethylester, Typ C Y [Gew.-Tle.] | Gew.-%[2] | Blockcopolyester rel. Viskosität[3] | Fp.[4] [°C] | Schmelzenthalpie[5] [J/g] |
|---|---|---|---|---|---|
| 10 | 35,0 | 16,9 | 1,38 | 221 | 46,1 |
| 11 | 60,0 | 25,9 | 1,36 | 218 | 40,9 |

[2-5] Bedeutung wie in Tabelle 1.

**Patentansprüche**

1. Blockcopolyester mit einer relativen Viskosität (gemessen in Phenol/o-Dichlorbenzol, Gewichtsverhältnis 1:1, bei 25 °C) von 1,15 bis 3,0, die – die Endgruppen nicht berücksichtigt – aus

A) 1–60 Gew.-%, bezogen auf Blockcopolyester, langkettiger Einheiten der Formel

$$-O-D-O-\overset{\overset{O}{\|}}{C}-S-\overset{\overset{O}{\|}}{C}- \qquad Ia$$

und/oder

$$-\overset{\overset{O}{\|}}{C}-D-\overset{\overset{O}{\|}}{C}-O-G-O- \qquad Ib$$

und/oder

$$-O-\overset{\overset{O}{\|}}{C}-O-D-O-\overset{\overset{O}{\|}}{C}-O-G-O- \qquad Ic$$

und

B) 40–99 Gew.-%, bezogen auf Blockcopolyester, kurzkettiger Einheiten der Formel

$$-O-G-O-\overset{\overset{O}{\|}}{C}-S-\overset{\overset{O}{\|}}{C}- \qquad II$$

bestehen, dadurch gekennzeichnet, dass

D einen zweiwertigen Polydienrest mit mindestens 50 Mol-% 1,4-Verknüpfungen, endständigen Verknüpfungsstellen und einem mittleren Molekulargewicht $\overline{M}_n$ von 400 bis 5000, wobei gegebenenfalls vorhandene Seitenketten nur Methyl- und/oder Vinylgruppen sein können,

G einen zweiwertigen aliphatischen Rest mit 1 bis 12 C-Atomen und/oder einen zweiwertigen cycloaliphatischen Rest mit 6 bis 12 C-Atomen mit einem Molekulargewicht unter 300, wobei mindestens 70 Mol-% von G einen einheitlichen Rest darstellen,

S eine Einfachbindung oder einen zweiwertigen aliphatischen, cycloaliphatischen und/oder aromatischen Rest mit 1 bis 14 C-Atomen und mit einem Molekulargewicht unter 300, wobei mindestens 70 Mol-% von S 1,4-Phenylenreste sind, darstellen.

2. Blockcopolyester nach Anspruch 1, dadurch gekennzeichnet, dass sie eine relative Viskosität (gemessen in Phenol/o-Dichlorbenzol, Gewichtsverhältnis 1:1, bei 25 °C) von 1,3 bis 2,5 aufweisen.

3. Blockcopolyester nach Ansprüchen 1 und 2, dadurch gekennzeichnet, dass sie

A) 10–50 Gew.-% langkettiger Einheiten und

B) 50–90 Gew.-% kurzkettiger Einheiten enthalten.

4. Blockcopolyester nach Ansprüchen 1–3, dadurch gekennzeichnet, dass sie

A) 16–45 Gew.-% langkettiger Einheiten und

B) 55–84 Gew.-% kurzkettiger Einheiten enthalten.

5. Blockcopolyester nach Ansprüchen 1–4, dadurch gekennzeichnet, dass D mindestens 70 Mol-%, 1,4-Verknüpfungen enthält.

6. Blockcopolyester nach Ansprüchen 1–5, dadurch gekennzeichnet, dass D ein mittleres Molekulargewicht $\overline{M}_n$ von 450 bis 3000 besitzt.

7. Blockcopolyester nach Ansprüchen 1–6, dadurch gekennzeichnet, dass D ein mittleres Molekulargewicht $\overline{M}_n$ von 500 bis 1200 besitzt.

8. Blockcopolyester nach Ansprüchen 1–7, dadurch gekennzeichnet, dass G einen Ethylen- oder 1,4-Butylenrest bedeutet.

9. Blockcopolyester nach Ansprüchen 1–8, dadurch gekennzeichnet, dass S einen 1,4-Phenylenrest bedeutet.

**Revendications**

1. Copolyesters séquencés ayant une viscosité relative (mesurée dans un mélange phénol/o-dichlorobenzène dans un rapport en poids de 1:1 à 25 °C) de 1,15 à 3,0 qui – sans considérer les groupes terminaux – se composent de

A) 1–60% en poids, par rapport aux copolyesters séquencés, de motifs à longue chaîne de formule

$$-O-D-O-\overset{\overset{O}{\|}}{C}-S-\overset{\overset{O}{\|}}{C}- \qquad \text{Ia}$$

et/ou

$$-\overset{\overset{O}{\|}}{C}-D-\overset{\overset{O}{\|}}{C}-O-G-O- \qquad \text{Ib}$$

et/ou

$$-O-\overset{\overset{O}{\|}}{C}-O-D-O-\overset{\overset{O}{\|}}{C}-O-G-O- \qquad \text{Ic)}$$

et

B) de 40 à 99% en poids, par rapport aux copolyesters séquencés, de motifs à chaîne courte de formule

$$-O-G-O-\overset{\overset{O}{\|}}{C}-S-\overset{\overset{O}{\|}}{C}- \qquad \text{II}$$

caractérisés en ce que

D représente un reste polydiénique divalent ayant au moins 50 moles % de liaisons 1,4, des sites terminaux de liaison et un poids moléculaire moyen $\overline{M}_n$ de 400 à 5000, des chaînes latérales éventuellement présentes ne pouvant alors être que des groupes méthyle et/ou vinyle,

G représente un reste aliphatique divalent ayant 1 à 12 atomes de carbone et/ou un reste cycloaliphatique divalent ayant 6 à 12 atomes de carbone, avec un poids moléculaire inférieur à 300, au moins 70 moles % de G représentant un même reste,

S représente une liaison simple ou un reste aliphatique, cycloaliphatique et/ou aromatique divalent ayant 1 à 14 atomes de carbone et ayant un poids moléculaire inférieur à 300, au moins 70 moles % de S représentant des restes de 1,4-phénylène.

2. Copolyesters séquencés selon la revendication 1, caractérisés en ce qu'ils présentent une viscosité relative (mesurée dans un mélange phénol/o-dichlorobenzène dans un rapport en poids de 1:1 à 25 °C) de 1,3 à 2,5.

3. Copolyesters séquencés selon les revendications 1 et 2, caractérisés en ce qu'ils renferment

A) 10 à 50% en poids de motifs à chaîne longue et

B) 50 à 90% en poids de motifs à chaîne courte.

4. Copolyesters séquencés selon les revendications 1–3, caractérisés en ce qu'ils contiennent

A) 16–45% en poids de motifs à chaîne longue et

B) 55–84% en poids de motifs à chaîne courte.

5. Copolyesters séquencés selon les revendications 1–4, caractérisés en ce que D contient au moins 70 moles % de liaisons 1,4.

6. Copolyesters séquencés selon les revendications 1–5, caractérisés en ce que D a un poids moléculaire moyen $\overline{M}_n$ de 450 à 3000.

7. Copolyesters séquencés selon les revendications 1–6, caractérisés en ce que D a un poids moléculaire moyen $\overline{M}_n$ de 500 à 1200.

8. Copolyesters séquencés selon les revendications 1–7, caractérisés en ce que G désigne un reste éthylène ou 1,4-butylène.

9. Copolyesters séquencés selon les revendications 1–8, caractérisés en ce que S désigne un reste 1,4-phénylène.

## Claims

1. Block copolyesters having a relative viscosity (measured in phenol/o-dichlorobenzene, weight ratio 1:1, at 25 °C) of 1.15 to 3.0, which – not considering the terminal groups – consist of

A) 1–60% by weight, based on the block copolyester, of long-chain units of the formula

$$-O-D-O-\overset{\overset{O}{\|}}{C}-S-\overset{\overset{O}{\|}}{C}- \qquad \text{Ia}$$

and/or

$$-\overset{\overset{O}{\|}}{C}-D-\overset{\overset{O}{\|}}{C}-O-G-O- \qquad \text{Ib}$$

and/or

$$-O-\overset{\overset{O}{\|}}{C}-O-D-O-\overset{\overset{O}{\|}}{C}-O-G-O- \qquad \text{Ic}$$

and

B) 40–99% by weight, based on the block copolyester, of short-chain units of the formula

$$-O-G-O-\overset{\overset{O}{\|}}{C}-S-\overset{\overset{O}{\|}}{C}- \qquad \text{II}$$

characterised in that

D represents a divalent polydiene radical containing at least 50 mol% of 1,4-bonds, terminal bonding points and having an average molecular weight $\overline{M}_n$ of 400 to 5,000, and any side chains which may be present may only be methyl and/or vinyl groups,

G represents a divalent aliphatic radical containing 1 to 12 C atoms and/or a divalent cycloaliphatic radical containing 6 to 12 C atoms with a molecular weight of below 300, at least 70 mol% of G representing a uniform radical, and

S represents a single bond or a divalent aliphatic, cycloaliphatic and/or aromatic radical containing 1 to 14 C atoms and having a molecular weight below 300, at least 70 mol% of S being 1,4-phenylene radicals.

2. Block copolyesters according to Claim 1, characterised in that they have a relative viscosity (measured in phenol/o-dichlorobenzene, weight ratio 1:1, at 25 °C) of 1.3 to 2.5.

3. Block copolyesters according to Claims 1 and 2, characterised in that they contain

A) 10–50% by weight of long-chain units and
B) 50–90% by weight of short-chain units.

4. Block copolyesters according to Claims 1–3, characterised in that they contain
A) 16–45% by weight of long-chain units and
B) 55–84% by weight of short-chain units.

5. Block copolyesters according to Claims 1–4, characterised in that D contains et least 70 mol% of 1,4-bonds.

6. Block copolyesters according to Claims 1–5, characterised in that D has an average molecular weight $\overline{M}_n$ of 450 to 3,000.

7. Block copolyesters according to Claims 1–6, characterised in that D has an average molecular weight $\overline{M}_n$ of 500 to 1,200.

8. Block copolyesters according to Claims 1–7, characterised in that G denotes an ethylene or 1,4-butylene radical.

9. Block copolyesters according to Claims 1–8, characterised in that S denotes a 1,4-phenylene radical.